**Europäisches Patentamt**

**European Patent Office**

**Office européen des brevets**

(11) Veröffentlichungsnummer: **0 239 745**
A2

(12) **EUROPÄISCHE PATENTANMELDUNG**

(21) Anmeldenummer: **87101452.8**

(22) Anmeldetag: **03.02.87**

(51) Int. Cl.³: **B 21 F 27/10**
**B 23 K 11/32**

(30) Priorität: **04.04.86 DE 3611248**

(43) Veröffentlichungstag der Anmeldung:
**07.10.87 Patentblatt 87/41**

(84) Benannte Vertragsstaaten:
**AT BE CH DE FR GB IT LI LU NL SE**

(71) Anmelder: **Baustahlgewebe GmbH**
**Burggrafenstrasse 5**
**D-4000 Düsseldorf 11(DE)**

(72) Erfinder: **Sotonyi, Thomas**
**Haupstrasse 37**
**D-3004 Isernhagen 2(DE)**

(74) Vertreter: **Patentanwaltsbüro Cohausz & Florack**
**Schumannstrasse 97**
**D-4000 Düsseldorf 1(DE)**

(54) Machine zum Herstellen von aus miteinander verschweissten Längs- und Querdrähten bestehenden Matten, insbesondere für Betonbewehrungszwecke.

(57) Die Erfindung bezieht sich auf eine Schweißmaschine für aus Längs- und Querdrähten bestehende Matten, insbesondere für Betonbewehrungszwecke. Die Schweißmaschine weist eine Vielzahl von einzeln auf gegenseitigen Abstand verfahrbaren Schweißeinheiten und einen ihnen in Transportrichtung der Längsdrähte vorgeordneten Einfädler auf. Der Einfädler umfaßt einen auf Schienen in Transportrichtung der Längsdrähte verfahrbaren Wagen mit einem Querträger 7, an dem Klemmzangen für die Längsdrähte verschiebbar gehalten sind. Zur Fixierung der einzelnen Klemmzangen 9 an jeder beliebigen Position des Querträgers 7 dient ein schlauchartiger Balg 20, der zwischen dem Träger 7 und den Klemmzangen angeordnet ist und bei Druckbeaufschlagung eine Verklemmung zwischen den Klemmzangen 9 und dem Träger 7 bewirkt.

Fig. 3

# COHAUSZ & FLORACK
### PATENTANWALTSBÜRO
SCHUMANNSTR. 97 D-4000 DÜSSELDORF 1

Telefon: (0211) 683346 · Telefax: (0211) 6790871 · Telex: 8586513 cop d

PATENTANWÄLTE:

Dipl.-Ing. W. COHAUSZ · Dipl.-Ing. R. KNAUF · Dipl.-Ing. H. B. COHAUSZ · Dipl.-Ing. D. H. WERNER · Dr. rer. nat. B. REDIES

02.02.1987

- 1 -

KN/So 46041EP

Baustahlgewebe GmbH
Burggrafenstraße 5
4000 Düsseldorf 11

Maschine zum Herstellen von aus miteinander verschweißten Längs- und Querdrähten bestehenden Matten, insbesondere für Betonbewehrungszwecke

Die Erfindung bezieht sich auf eine Maschine zum Herstellen von aus miteinander verschweißten Längs- und Querdrähten bestehenden Matten, insbesondere für Betonbewehrungszwecke, bestehend aus mehreren nebeneinander angeordneten, bezüglich ihrer gegenseitigen Abstände einstellbaren Schweißeinheiten, deren gegenseitige Abstände den jeweiligen Abständen der Längsdrähte entsprechen, und aus den Schweißeinheiten zugeordneten Transportorganen für die Längs- und Querdrähte sowie aus einem den Schweißeinheiten in Transportrichtung der Längsdrähte vorgeordneten Einfädler für die Längsdrähte.

Schweißmaschinen dieser Art sind bekannt (DE-OS 34 22 540A1). Der Vorteil solcher Schweißmaschinen besteht darin, daß bei einem Programmwechsel die einzelnen Schweißeinheiten motorisch in die neuen Positionen gefahren werden. Die Umpositionierung macht es dabei erforderlich, auch die Zufuhr der Längsdrähte neu einzustellen.

Bei einer andersartigen Schweißmaschine zum Herstellen von aus miteinander verschweißten Längs- und Querdrähten bestehenden Matten sind keine auf gegenseitigen Abstand einstellbare Schweißeinheiten vorgesehen, vielmehr ist die Schweißmaschine durch feste Anordnung von Einstecktrichtern nur für einen konstanten, vorgegebenen Längsdrahtabstand eingerichtet. Die Zufuhr der Längsdrähte zu diesen Einstecktrichtern erfolgt mittels eines in Schienen in Transportrichtung der Längsdrähte verfahrbaren Wagens, auf dem einzelne Einstecktrichter mit Klemmvorrichtungen für die Längsdrähte angeordnet sind. Eine solche Schweißmaschine ist weder bezüglich der Schweißelektroden noch bezüglich der Längsdrahtzuführung für eine stufenlose Einstellung des Längsdrahtabstandes eingerichtet (DE-OS 23 63 369).

Der Erfindung liegt die Aufgabe zugrunde, eine Maschine der eingangs genannten Gattung zu schaffen, die mit einfachen Mitteln eine abstandsrichtige Zufuhr der Anfänge von Längsdrähten zu den Schweißeinheiten ermöglicht.

Diese Aufgabe wird in Verbindung mit den Oberbegriffsmerkmalen erfindungsgemäß dadurch gelöst, daß der Einfädler in an sich bekannter Weise einen auf Schienen in Transportrichtung der Längsdrähte verfahrbaren Wagen aufweist, der auf einem Querträger verschiebbare Klemmzangen für die Längsdrähte trägt, wobei die Klemmzangen durch einen zwischen ihnen und dem Querträger angeordneten, mit einem Druckmedium beaufschlagbaren Balg am Querträger festklemmbar sind.

Bei dem nur für die Einfädelung der Längsdrahtanfänge in die Längsdrahttransporteinrichtungen der Schweißeinheiten benötigten Einfädler lassen sich die Klemmzangen bei fehlender Druckbeaufschlagung des Balges frei auf dem Querträger in die den Schweißeinheiten entsprechende Position verschieben. Sind alle Klemmzangen in die richtige Position geschoben, dann werden sie gemeinsam durch Druckbeaufschlagung des Balges verklemmt. Diese Fixierung ist nicht an ein bestimmtes Rastermaß gebunden, sondern an jeder beliebigen Stelle des Querträgers möglich.

Vorzugsweise ist in Ausgestaltung der Erfindung jede Klemmzange nach Schlittenart auf Führungsschienen des Querträgers gelagert. Konstruktiv besonders einfach ist eine Ausführung, bei der der Balg ein sich über die gesamte Verstellänge der Klemmzangen erstreckender, in einem Bett des Querträgers gehaltener Schlauch ist.

Im folgenden wird die Erfindung anhand einer ein Ausführungsbeispiel schematisch darstellenden Zeichnung näher erläutert. Es zeigen:

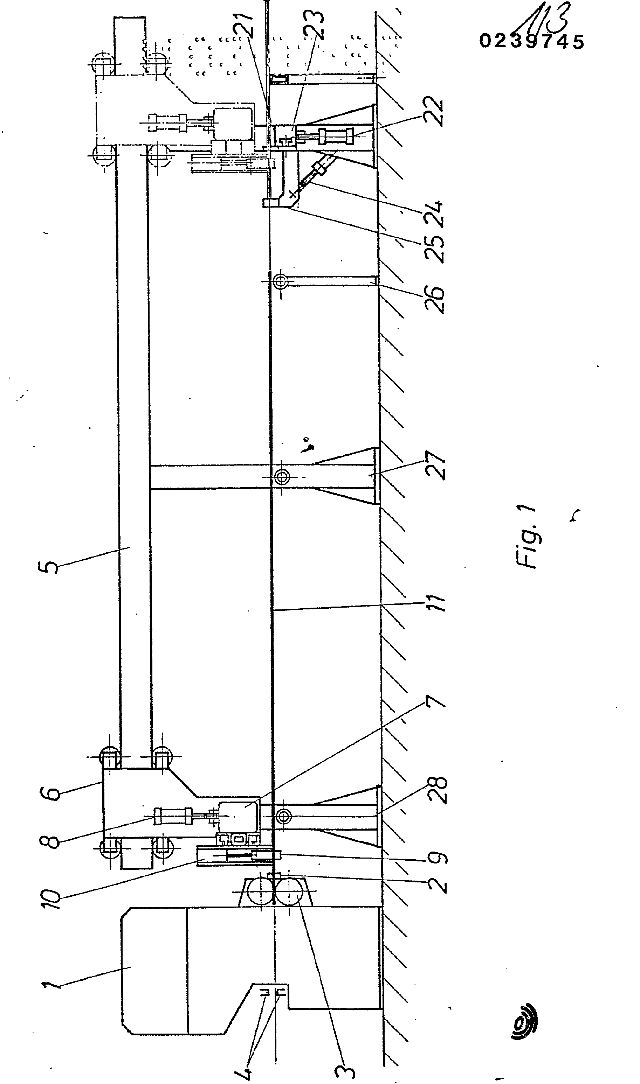

Fig. 1 eine Maschine mit in Transportrichtung der Längsdrähte vorgeordnetem Einfädler,

Fig. 2 mehrere nebeneinander auf einem Querträger gehaltene Klemmzangen des Einfädlers in Ansicht und

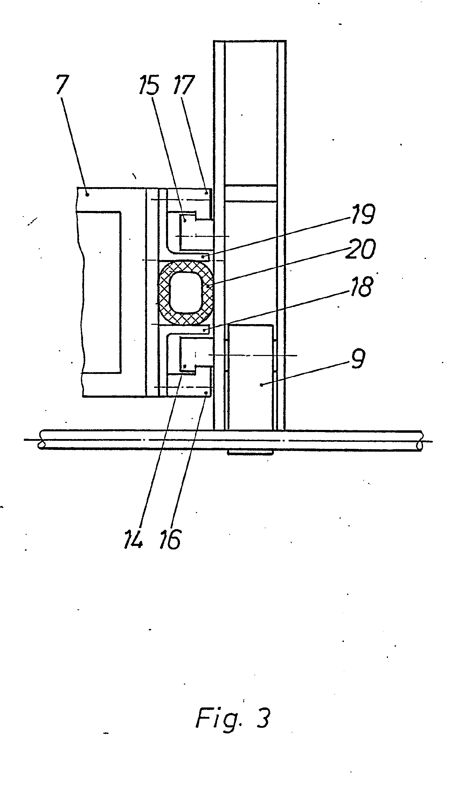

Fig. 3 eine der Klemmzangen gemäß Fig. 2 mit Träger im Schnitt nach der Linie I - I der Fig. 2.

Die Schweißmaschine weist mehrere nebeneinander mit gegenseitigem Abstand voneinander angeordnete, selbständige Schweißeinheiten 1 auf. Die Schweißeinheiten sind, wie bekannt (DE-OS 34 22 540), auf einer Schiene verfahrbar. Einlaufseitig weisen sie für Längsdrähte Führungshülsen 2 und zum Transport der Längsdrähte ein angetriebenes Rollenpaar 3 auf. Auslaufseitig weist jede Schweißeinheit 1 eine Schweißzange 4 auf, über die die Schweißleistung in die von ihr kreuzweise eingeklemmten Längs- und Querdrähte eingeleitet wird.

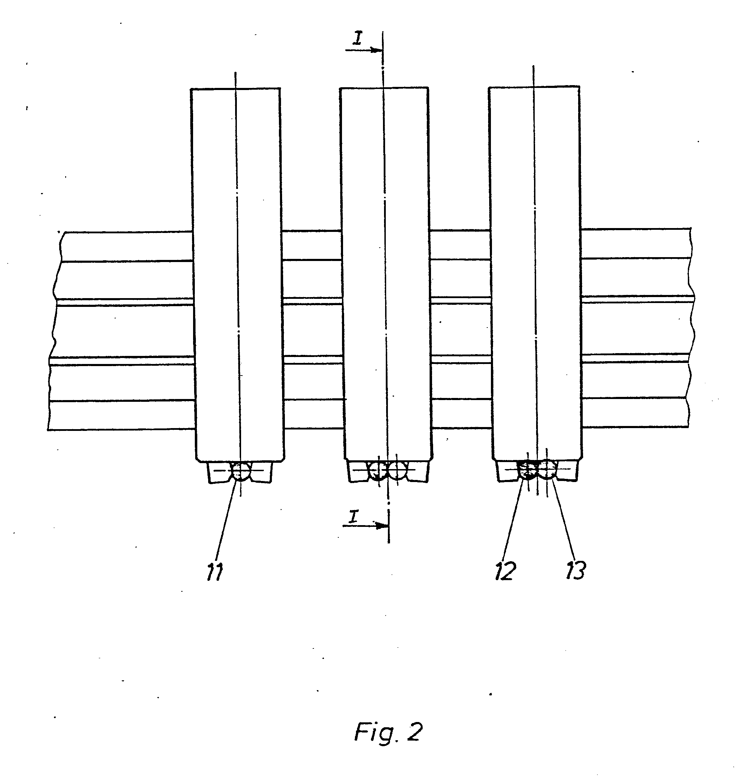

Den Schweißeinheiten 1 ist ein Einfädler vorgeordnet, der einen auf Schienen 5 verfahrbaren Wagen 6 aufweist. An einem Querträger 7, der mittels einer Zylinderkolbeneinheit 8 höhenverstellbar am Wagen 6 gehalten ist, sind mehrere Klemmzangen 9 verschiebbar gelagert. Die Betätigung der Klemmbacken der Klemmzangen 9 erfolgt über eine Zylinderkolbenanordnung 10. Die Klemmbacken können einen Längsdraht 11 oder zwei Längsdrähte 12,13 einklemmen, wie Fig. 2 zeigt. Jede Klemmzange 9 ist mit zwei Kufen 14,15 auf Schienen 16,17 des Trägers 7 geführt. In einem von Winkelprofilen 18,19 gebildeten Bett ist ein schlauchförmiger Balg 20 gehalten, der mit flüssigem oder gasförmigem Medium beaufschlagbar ist. Bei Druckbeaufschlagung des Balges 20 werden die Klemmzangen 9 in ihrer Position festgeklemmt.

Am Anfang des Verfahrweges des Einfädlers ist ein Voreinfädler 21 angeordnet, der ein durch eine Zylinderkolbenanordnung 22 höhenverstellbares Bett 23 für die Längsdrahtanfänge und einen durch eine Zylinderkolbenanordnung 24 nach unten wegklappbaren vorderen Anschlag 25 zum Ausrichten der Längsdrahtanfänge umfaßt. Zwischen dem Voreinfädler 21 und den Schweißeinheiten sind über den Verfahrweg des Einfädlers verteilt mehrere rollenbestückte Stützen 26,27,28 für die Längsdrähte angeordnet.

Bei der erfindungsgemäß ausgebildeten Maschine ist es mit dem Einfädler möglich, die Längsdrähte ausgerichtet in den den Schweißeinheiten entsprechenden Längsdrahtabständen in die Transportvorrichtungen 3 der Schweißeinheiten einzuführen. Ohne großen mechanischen Aufwand lassen sich die einzelnen Klemmzangen 9 bei drucklosem Balg (20) in Position bringen und durch Druckbeaufschlagung des Balges 20 gemeinsam fixieren.

COHAUSZ & FLORACK

PATENTANWALTSBÜRO

SCHUMANNSTR. 97 D-4000 DÜSSELDORF 1

Telefon: (0211) 683346 · Telefax: (0211) 6790871 · Telex: 8586513 cop d

PATENTANWÄLTE:

Dipl.-Ing. W. COHAUSZ · Dipl.-Ing. R. KNAUF · Dipl.-Ing. H. B. COHÁUSZ · Dipl.-Ing. D. H. WERNER · Dr. rer. nat. B. REDIES

02.02.1987
KN/So 46041EP

Patentansprüche

1. Maschine zum Herstellen von aus miteinander verschweißten Längs- und Querdrähten bestehenden Matten, insbesondere für Betonbewehrungszwecke, bestehend aus mehreren nebeneinander angeordneten, bezüglich ihrer gegenseitigen Abstände einstellbaren Schweißeinheiten, deren gegenseitige Abstände den jeweiligen Abständen der Längsdrähte entsprechen, und aus den Schweißeinheiten zugeordneten Transportorganen für die Längs- und Querdrähte sowie aus einem den Schweißeinheiten in Transportrichtung der Längsdrähte vorgeordneten Einfädler für die Längsdrähte,
d a d u r c h   g e k e n n z e i c h n e t , daß der Einfädler in an sich bekannter Weise einen auf Schienen (15) in Transportrichtung der Längsdrähte (11 bis 13) verfahrbaren Wagen (6) aufweist, der auf einem Querträger (7) verschiebbare Klemmzangen (9) für die Längsdrähte (11 bis 13) trägt, wobei die Klemmzangen (9) durch einen zwischen ihnen und dem Querträger (7) angeordneten, mit einem Druckmedium beaufschlagbaren Balg (20) am Querträger (7) festklemmbar sind.

2. Maschine nach Anspruch 1,
d a d u r c h   g e k e n n z e i c h n e t , daß jede Klemmzange (9) nach Schlittenart auf Führungsschienen (16,17) des Querträgers (7) gelagert ist.

3. Maschine nach Anspruch 1 oder 2,

dadurch gekennzeichnet, daß der Balg (20) ein sich über die gesamte Verstellänge der Klemmzangen (9) erstreckender, in einem Bett (18,19) des Querträgers (7) gehaltener Schlauch ist.

Fig. 1

Fig. 2

0239745

Fig. 3